(19) Europäisches Patentamt
European Patent Office
Office européen des brevets

(11) Numéro de publication: **0 192 528**
**B1**

(12) # FASCICULE DE BREVET EUROPEEN

(45) Date de publication du fascicule du brevet: **24.05.89**

(51) Int. Cl.⁴: **C07F 7/08**, C01B 33/04

(21) Numéro de dépôt: **86400175.5**

(22) Date de dépôt: **29.01.86**

(54) **Procédé de fabrication d'hydrogeno-silanes.**

(30) Priorité: **04.02.85 FR 8501486**

(43) Date de publication de la demande:
**27.08.86 Bulletin 86/35**

(45) Mention de la délivrance du brevet:
**24.05.89 Bulletin 89/21**

(84) Etats contractants désignés:
**BE DE GB IT NL**

(56) Documents cités:
**EP-A- 0 138 669**
**WO-A-83/00686**
**FR-A- 1 473 374**
**US-A- 4 291 167**

**CHEMICAL ABSTRACTS, vol. 98, no. 24, 13 juin 1983, page 131, no. 200736e, Columbus, Ohio, US**

(73) Titulaire: **RHONE-POULENC CHIMIE, 25, quai Paul Doumer, F-92408 Courbevoie Cédex(FR)**

(72) Inventeur: **Soula, Gérard, 33, rue Nungesser, F-69330 Meyzieu(FR)**
Inventeur: **Lepage, Jean-Luc, 81, Chemin de Chavril, F-69110 Sainte-Foy-Les-Lyon(FR)**

(74) Mandataire: **Fabre, Madeleine-France et al, RHONE-POULENC INTERSERVICES Service Brevets Chimie 25, quai Paul Doumer, F-92408 Courbevoie Cédex(FR)**

**EP 0 192 528 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de fabrication d'hydrogéno-silanes; elle a plus particulièrement trait à la fabrication de monosilane.

On connaît des procédés de production de monosilane par réduction d'halogénures de silicium par des agents réducteurs comme l'hydrure de lithium aluminium ou les hydrures de lithium ou de sodium.

La réduction des halogénures de silicium par $LiAlH_4$ est notamment décrite dans l'Encyclopedia of Chemical Technologie Kirk-Othmer, Vol. 20, 3ème édition 1982, pages 887–911 (906). Cette réaction a lieu en milieu solvant, elle est cependant d'un usage industriel peu développé du fait notamment de son coût très élevé.

La réduction par les hydrures de sodium ou de lithium a notamment été décrite dans la même référence que ci-dessus pour $LiAlH_4$, cette réaction nécessite de travailler à haute température dans des solvants polaires ou en milieu sels fondus du fait de la faible solubilisation de l'hydrure de lithium.

D'autres références décrivent la réduction des halogénures de silicium par des hydrures alcalins. Ainsi, le brevet japonais no 57 196 716 du 29 Mai 1981 (résumé publié dans C.A. vol. 98 no 24 p. 131 no 2 007 36e) décrit un procédé de production de monosilane par réduction de tétrachlorure de silicium ou trichlorure de silicium par un hydrure métallique en présence d'éthers couronnes comme catalyseur.

Le brevet européen no 86 191 décrit également un procédé de réduction de composé MX par un hydrure de sodium, l'agent réducteur utilisé étant un hydroborate de sodium.

Le procédé de la présente invention qui concerne la réduction par un hydrure alcalin ou alcalino-terreux d'un halogéno-silane en présence d'un catalyseur vise à remédier aux inconvénients présentés par les procédés décrits ci-dessus en apportant notamment les avantages suivants:

– la quantité de catalyseur utilisée est très faible,

– la réduction peut être effectuée au voisinage de la température ambiante et permet ainsi, notamment, d'éliminer des éventuelles réactions secondaires,

– elle permet d'effectuer la réduction en présence d'hydrures réputés être très peu efficaces comme, par exemple, l'hydrure de calcium,

– elle permet la mise en œuvre de solvants industriels à bas point d'ébullition.

Le procédé selon la présente invention concerne en effet un procédé de fabrication d'hydrogéno-silanes par réduction d'halogéno-silanes par un hydrure alcalin ou alcalino-terreux généralement dans un solvant en présence d'un catalyseur caractérisé en ce que le catalyseur est un agent séquestrant de formule

$N-[CHR_1-CHR_2-O-(CHR_3-CHR_4-O)_n-R_5]_3$ [I]

dans laquelle n est un nombre entier supérieur ou égal à 0 et inférieur ou égal à 10 ($0 \leq n \leq 10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_mH_{2m}-O-$ ou $C_mH_{2m+1}-O-$, où m est compris entre 1 et 12 ($1 \leq m \leq 12$).

De tels composés sont déjà utilisés en combinaison avec un sel minéral ionique pour cataliser les réactions de dismutation et distribution d'halogénoalkalisanes, comme décrit dans le brevet européen no 138 669.

La réaction mise en œuvre selon le procédé de l'invention peut s'écrire

$$\frac{4-(m+n)}{p} MHp + H_mR_nSiX_{4-(n+m)} \xrightarrow[\text{catalyseur}]{} R_n\,SiH_{4-n} + \frac{4-(m+n)}{p} MXp$$

dans laquelle les radicaux R identiques ou différents représentent un groupement: alkyle, aryle et/ou alkoxy; X représente les halogènes et de préférence le chlore et M un alcalin ou un alcalino-terreux et de préférence le lithium, le sodium, le calcium ou le magnésium. n est un nombre entier égal à 0, 1, 2 ou 3 et m est un nombre entier égal à 0, 1, 2 ou 3 et $m + n < 3$ et p représente la valence de l'alcalin ou de l'alcalino-terreux.

Les halogéno-silanes que l'on met en œuvre selon le procédé de l'invention sont ceux qui ont pour formule $R_nH_mSiX_{4-(n+m)}$ dans laquelle n peut avoir les valeurs 0, 1, 2 ou 3 et m les valeurs 1, 2 ou 3 et R, quand il existe, est choisi parmi les radicaux alcoyle ou aryle et/ou alkoxy et de préférence les radicaux: méthyle, éthyle, propyle, isopropyle et/ou phényle, X est choisi parmi les halogènes et représente de préférence le chlore et les groupements alkoxy et représente de préférence les groupements méthoxy ou éthoxy. Selon un mode de mise en œuvre préféré de l'invention, on utilise le tétrachlorure de silicium, le trichlorosilane, le dichlorosilane, le diméthyldichlorosilane, le méthylhydrogénodichlorosilane, le diphényldichlorosilane, le phényltrichlorosilane, le méthylphényldichlorosilane ou le diéthyldichlorosilane ou leurs mélanges.

Les hydrures alcalins ou alcalino-terreux MHp mis en oeuvre selon l'invention sont, de préférence, choisis parmi : l'hydrure de lithium, l'hydrure de sodium, l'hydrure de calcium ou l'hydrure de magnésium.

Selon l'invention, le catalyseur est un agent séquestrant de formule :
$N-[CHR_1-CHR_2-O-(CHR_3-CHR_4-O)_n-R_5]_3$ (I)
dans laquelle n est un nombre entier supérieur ou égal à 0 et inférieur ou égal à 10 ($0<n<10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical -$C_mH_{2m}$-Ø ou $C_mH_{2m+1}$-Ø-, où m est compris entre 1 et 12 ($1<m<12$).

Selon un mode de réalisation préférentiel de l'invention, on utilise un agent séquestrant de formule (I) dans laquelle $R_1$, $R_2$, $R_3$ et $R_4$ représentent un atome d'hydrogène ou un radical methyle, $R_5$ et n ayant la signification précédente.

Parmi ces derniers, on préfère encore plus particulièrement mettre en oeuvre les agents séquestrants pour lesquels n est supérieur ou égal à 0 et inférieur ou égal à 6 et pour lesquels $R_5$ représente un radical alkyle ayant de 1 à 4 atomes de carbone.

On peut citer :

- la tris(oxa-3 butyl)amine de formule :
$N-(CH_2-CH_2-O-CH_3)_3$
- la tris(dioxa-3,6 heptyl)amine de formule :
$N-(CH_2-CH_2-O-CH_2-CH_2-O-CH_3)_3$
- la tris(trioxa-3,6,9 décyl)amine de formule :
$N-(CH_2-CH_2-O-CH_2-CH_2-O-CH_2-CH_2-O-CH_3)_3$
- la tris(dioxa-3,6 octyl)amine de formule :
$N-(CH_2-CH_2-O-CH_2-CH_2-O-C_2H_5)_3$
- la tris(trioxa-3,6,9 undécyl)amine de formule :
$N-(CH_2-CH_2-O-CH_2-CH_2-O-CH_2-CH_2-O-C_2H_5)_3$
- la tris(dioxa-3,6 nonyl)amine de formule :
$N-(CH_2-CH_2-O-CH_2-CH_2-O-C_3H_7)_3$
- la tris(trioxa-3,6,9 dodécyl)amine de formule :
$N-(CH_2-CH_2-O-CH_2-CH_2-O-CH_2-CH_2-O-C_3H_7)_3$
- la tris(dioxa-3,6 décyl)amine de formule :
$N-(CH_2-CH_2-O-CH_2-CH_2-O-C_4H_9)_3$
- la tris(trioxa-3,6,9 tridécyl)amine de formule :
$N-(CH_2-CH_2-O-CH_2-CH_2-O-CH_2-CH_2-O-C_4H_9)_3$
- la tris (tetra-oxa-3,6,9,12 tridecyl) amine de formule :
$N-[CH_2-CH_2-O-(CH_2-CH_2-O)_3-CH_3]_3$
- la tris(hexa-oxa-3,6,9,12,15,18 nonadecyl)amine de formule :
$N-[CH_2-CH_2-O-(CH_2-CH_2-O)-_5 CH_3]_3$
- la tris(dioxa-3,6 méthyl-4 heptyl) amine de formule :
$N-[CH_2-CH_2-OCH-(CH_3)-CH_2-O-CH_3]_3$
- la tris(dioxa-3,6 diméthyl-2,4 heptyl) amine de formule :
$N-[CH_2CH-(CH_3)-OCH(CH3)-CH_2-O-CH_3]_3$.

Les amines utilisées sont connues en tant que telles dans l'art antérieur. C'est ainsi que le brevet français 1.302.365 cite l'obtention des amines tertiaires $N-(CH_2-CH_2-O-CH_3)_3$ et $N-(CH_2-CH_2-O-CH_2-CH_2-O-CH_3)_3$ comme sous produits de la synthèse des amines primaires et secondaires correspondantes, ces amines primaires et secondaires étant des produits intéressants comme intermédiaires en vue de la synthèse de substances pharmaceutiques, comme inhibiteurs de corrosion, comme intermédiaires en vue de la synthèse de produits chimiques intéressants en agriculture et comme émulsifiants.

Selon une variante du procédé de l'invention l'agent séquestrant peut être greffé sur un polymère organique réticulé ainsi la présente invention concerne également un procédé de fabrication d'hydrogénosilane par réduction d'halogéno-silane par un hydrure alcalin dans un solvant en présence d'un catalyseur caractérisé en ce que le catalyseur est un agent séquestrant greffé constitué par un support polymère organique réticulé et par une pluralité de groupes fonctionnels, fixés sur ledit support, de formule générale :

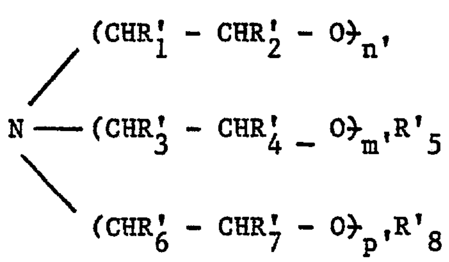

(II)

dans laquelle $R'_1$, $R'_2$, $R'_3$, $R'_5$, $R'_6$ et $R'_7$ identiques ou différents sont chacun un atome d'hydrogène ou un radical alkyle ayant de 1 à 4 atomes de carbone, $R'_5$ et $R'_8$ identiques ou différents représentent un atome d'hydrogène, un radical alkyle ou cycloalkyle ayant de 1 à 12 atomes de carbone, un radical phényle, un radical $-C_{q'}H_{2q'}$-Ø- ou $C_{q'}H_{2q'+1}$-Ø- avec q' supérieur ou égal à 1 et inférieur ou égal à environ 12, et dans laquelle n', m', et p' identiques ou différents sont supérieurs ou égaux à 1 et inférieurs ou égaux à 10.

Selon la variante du procédé de l'invention, on utilise un agent séquestrant supporté constitué par un support polymère organique réticulé et par une pluralité de groupes fonctionnels fixés sur ledit support, de formule générale (II) dans laquelle $R'_1$, $R'_2$, $R'_3$, $R'_5$, $R'_6$ et $R'_7$ identiques ou différents, représentent un atome d'hydrogène ou le radical méthyle et $R'_5$ et $R'_8$ identiques ou différents représentent un atome d'hydrogène ou un radical alkyle ayant de 1 à 4 atomes de carbone. Selon un autre mode de réalisation préférentiel de l'invention, n', m' et p' identiques ou différents sont supérieurs ou égaux à 1 et inférieurs ou égaux à 6.

On peut citer comme exemples de groupes fonctionnels, les groupes de formules suivantes :

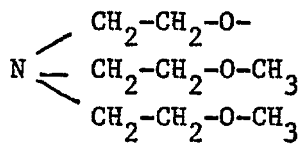

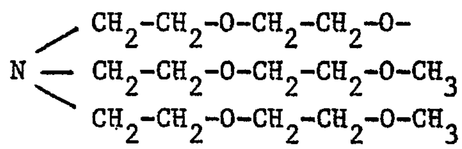

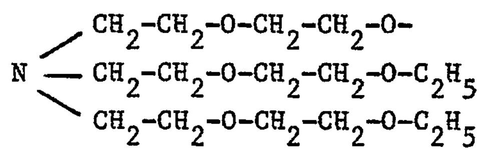

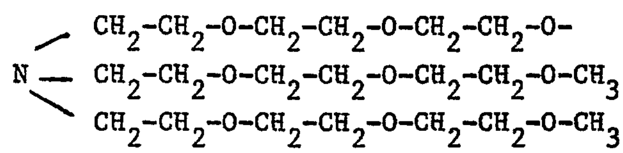

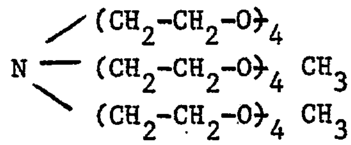

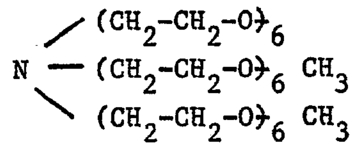

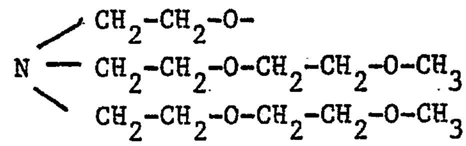

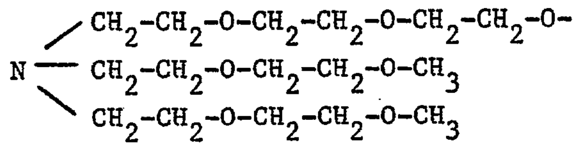

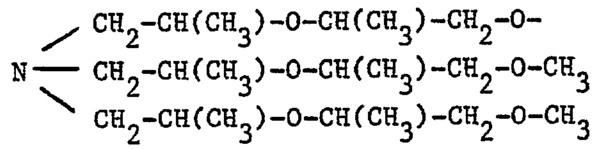

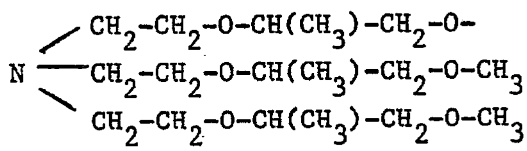

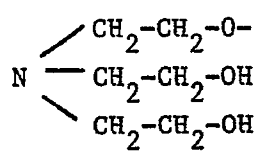

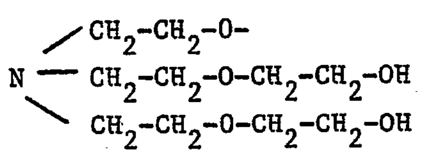

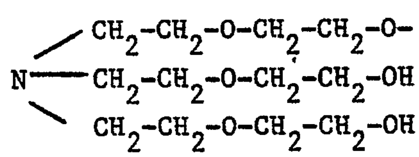

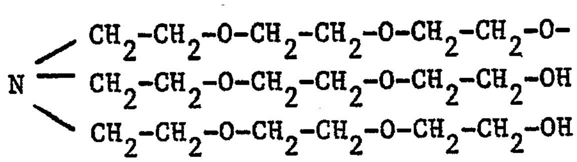

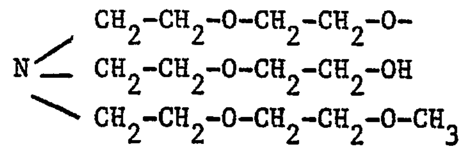

Le support peut dériver de tout polymère organique réticulé comportant des groupements substituables par les groupements fonctionnels de formule (II).

On peut citer comme exemples de polymères organiques adaptés à la présente invention, les polymères dérivés de composés vinylaromatiques tels que le styrène, le methylstyrène et les copolymères de composés vinylaromatiques et de diènes conjugués en $C_4$-$C_6$ tels que le copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule (II) greffés sur le polystyrène soient actifs. Pour cela, il faut que les molécules du solvant dans lequel l'agent séquestrant supporté sera mis en oeuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à environ 10%. Encore plus préférentiellement, le taux de réticulation est inférieur à 5% environ.

Le groupement substituable est de préférence le chlore ou le brome du radical chloro ou bromo methyl $-CH_2Cl$ ou $-CH_2Br$ fixé sur le noyau benzénique du polystyrène.

On préfère tout particulièrement que le pourcentage de noyaux benzéniques du polystyrène portant un groupement fonctionnel soit supérieur à 5%. Encore plus préférentiellement, ce pourcentage est supérieur à 10%.

On peut représenter les agents séquestrants supportés préférés par la formule suivante :

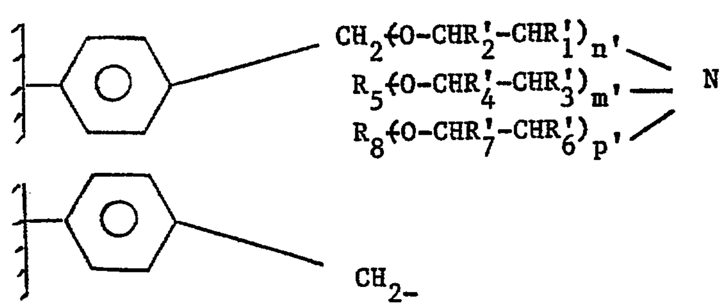

dérive du polystyrène chloro ou bromo méthylé réticulé par le divinylbenzène de formule:

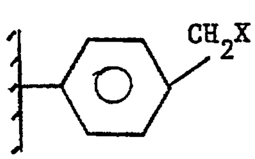

où X représente Cl ou Br.

Le procédé selon l'invention est mis en oeuvre généralement et de préférence en présence d'un solvant, l'agent séquestrant pouvant jouer lui-même le rôle de solvant Ce solvant doit répondre à un certain nombre de conditions : il faut qu'il solubilise l'halogéno-silane de départ; il faut aussi qu'il soit inerte chimiquement vis à vis des silanes introduits ou formés et de l'hydrure alcalin ou alcalino-terreux utilisé. La quantité minimale de solvant utilisée est, de préférence, telle que l'hydrure alcalin ou alcalino-terreux soit en suspension dans le milieu réactionnel.

On choisit, de préférence, un solvant comme par exemple, le chlorobenzène, l'orthodichlorobenzène, le benzène, le toluène, le cyclohexane, l'heptane, le dichloroéthane, le chlorure de méthylène, le tétrahydrofurane, le dioxane, le diméthoxyéthane.

Le procédé de l'invention est mis en oeuvre à une température comprise entre -30°C et la température d'ébullition du milieu réactionnel, de préférence entre la température ambiante et la température d'ébullition du mélange réactionnel. Dans ce dernier cas on peut séparer l'hydrogéno-silane obtenu au fur et à mesure de sa formation. On peut opérer à une température voisine de la température ambiante, c'est-à-dire entre 0 et 50°C, ceci constitue un des avantages fondamental du procédé selon l'invention.

On opère de préférence à la pression atmosphérique. Bien entendu, des pressions supérieures ou inférieures à la pression atmosphérique ne sont pas exclues.

Selon le procédé de l'invention, le rapport molaire entre le composé séquestrant et l'hydrure alcalin ou alcalino-terreux est compris entre 5 et 0,0001 et de préférence entre 0,5 et 0,001.

La proportion molaire entre l'hydrure et l'halogéno-silane est généralement voisin de la stoechiométrie. Un léger excès d'hydrure peut être, toutefois, préférable pour réduire totalement l'halogéno-silane. Cet excès est de préférence compris entre 10 et 300% molaire.

La réaction de réduction est opérée de préférence en introduisant lentement l'halogéno-silane dans le milieu réactionnel, de plus il peut être avantageux d'opérer le refroidissement du milieu réactionnel pour éviter une trop forte augmentation de la température qui favouriserait les réactions secondaires de formation de sous-produits.

Les hydrogéno-silanes obtenus par la réaction de réduction peuvent être séparés au fur et à mesure de leur formation.

Les composés séquestrants greffés mis en oeuvre selon l'invention permettent de travailler de préférence en continu sur colonne, alors que les composés séquestrants non greffés permettent de travailler de préférence en discontinu.

Les agents séquestrants de formule (I) utilisés dans le procédé selon l'invention peuvent être préparés comme décrit dans la demande de brevet français publiée sous le n° 2 450 120.

La présente invention permet ainsi d'opérer la réduction des halogéno-silanes à température ambiante et avec une productivité exceptionnelle et mettant en oeuvre de faibles quantités de catalyseur.

D'autres caractéristiques et avantages de l'invention apparaîtront plus clairement à la lecture des exemples qui vont suivre.

EXEMPLE 1

Synthèse de $(C_6H_5)_2Si\ H_2$ par réduction de $(C_6H_5)_2\ SiCl_2$ avec LiH.

Dans un ballon de 1 litre, muni d'un agitateur à pales et surmonté d'un réfrigérant ascendant et d'une ampoule de coulée, nous introduisons, après inertage à l'argon :

69,24g de tris (dioxa-3,6 heptyl) amine (ci-après mentionné : TDA-1) soit 0,214 moles,

31,5g de LiH, soit 3,96 moles.

Sous agitation, nous coulons goutte à goutte 501g de $(C_6H_5)_2SiCl_2$, soit 1,97 moles. Durée de la coulée : 6h.

Le milieu réactionnel est chauffé à 50°C en début de coulée afin d'amorcer la réaction de réduction du diphényldichlorosilane. Une fois la réaction amorcée, l'exothermie importante permet de maintenir la température du milieu à 120°C environ. Un léger chauffage est nécessaire en fin de coulée pour maintenir cette température. Le milieu réactionnel est chauffé à 130-150°C pendant 1 heure après la coulée de $(C_6H_5)_2SiCl_2$.

Une analyse chromatographie phase gazeuse en fin de réaction nous donne la composition suivante : (pourcentages massiques)

$(C_6H_5)_2SiH_2$ : 48%

$(C_6H_5)_2SiHCl$ : 2%

$(C_6H_5)_2SiCl_2$ : 50%

Ce qui correspond à un taux de transformation de $(C_6H_5)_2SiCl_2$ de 58% et une sélectivité en $(C_6H_5)_2SiH_2$ de 97%.

Après élimination de la phase solide par filtration (LiCl formé et LiH qui n'a pas réagit) le diphénylsilane formé est séparé des autres phényl-silanes par distillation fractionnée sous vide : $(C_6H_5)_2SiH_2$ distillé à 78°C sous 0,5mmg Hg et $(C_6H_5)_2SiCl_2$ à 110°C sous le même vide.

Nous avons pu ainsi obtenir un diphénylsilane dont la pureté est supérieure à 98,7%.

EXEMPLE 2

Synthèse de $C_6H_5SiH_3$ par réduction de $C_6H_5SiCl_3$ avec LiH.

Nous avons, dans cet exemple, effectué des réductions de $C_6H_5SiCl_3$ par LiH en présence de TDA 1 et en milieu chlorobenzène, en faisant varier le rapport $LiH/C_6H_5SiCl_3$.

Appareillage utilisé : ballon de 50 ml avec agitation magnétique, surmonté d'un réfrigérant ascendant et d'une ampoule de coulée.

Le phényltrichlorosilane est introduit, par l'intermédiaire de l'ampoule de coulée, dans le ballon contenant la TDA 1, le solvant et l'hydrure de lithium.

La réaction commence dès le début de la coulée, à température ambiante ; l'exothermie importante nécessite de refroidir le réacteur afin de maintenir la température inférieure à 80°C.

En fin de coulée, dont la durée est de l'ordre de 15mn, le milieu réactionnel est chauffé à 120°C.

Nous indiquons dans le tableau ci-dessous, les différents essais effectués ainsi que les résultats obtenus : composition du milieu en fin de coulée de $C_6H_5SiCl_3$ et après chauffage, taux de transformation dy phényltrichlorosilane correspondant ainsi que sélectivité en $C_6H_5SiH_3$ :

| No essai | | 1 | 2 | 3 | 4 | 5 |
|---|---|---|---|---|---|---|
| Charge | LiH | 1,064 g ($13,4.10^{-2}$ moles) | 1,456 g ($18,3.10^{-2}$ moles) | 1,733 g ($21,8.10^{-2}$ moles) | 3,121 g ($26,7.10^{-2}$ moles) | 1,564 g ($19,7.10^{-2}$ moles) |
| | TDA 1 | 1,811 g ($0,56.10^{-2}$ moles) | 1,908 g ($0,59.10^{-2}$ moles) | 2,005 g ($0,62.10^{-2}$ moles) | 1,973 g ($0,61.10^{-2}$ moles) | |
| | $C_6H_5Cl$ | 13,68 g ($12,2.10^{-2}$ moles) | 10,14 g ($9,0.10^{-2}$ moles) | 9,61 g ($8,5.10^{-2}$ moles) | 9,94 g ($8,8.10^{-2}$ moles) | 7,34 g ($6,5.10^{-2}$ moles) |
| | $C_6H_5SiCl_3$ | 9,223 g ($4,36.10^{-2}$ moles) | 7,044 g ($3,33.10^{-2}$ moles) | 6,008 g ($2,84.10^{-2}$ moles) | 5,267 g ($2,49.10^{-2}$ moles) | 3,977 g ($1,88.10^{-2}$ moles) |
| Rapport molaire $LiH/C_6H_5SiCl_3$ | | 3,1 | 5,5 | 7,7 | 10,7 | 10,5 |
| Composition du milieu après coulée $C_6H_5SiCl_3$ | $C_6H_5SiH_3$ | 10,9% | 12,4% | 21,3% | 26,7% | 0% |
| | $C_6H_5SiH_2Cl$ | 0% | 0% | 0% | 0% | 0% |
| | $C_6H_5SiHCl_2$ | 0% | 0% | 0% | 0% | 0% |
| | $C_6H_5SiCl_3$ | 23,1% | 21,6% | 4,6% | 0,2% | 35,1% |
| | $C_6H_5Cl$ | 66,0% | 66,0% | 74,1% | 73,1% | 64,9% |

| No essai | | 1 | 2 | 3 | 4 | 5 |
|---|---|---|---|---|---|---|
| Composition du milieu après chauffage | $C_6H_5SiH_3$ | 9,1% | 11,6% | 23,3% | 26,8% | 0% |
| | $C_6H_5SiH_2Cl$ | 0,7% | 0,06% | 0% | 0% | 0% |
| | $C_6H_5SiHCl_2$ | 7,3% | 4,0% | 0% | 0% | 0% |
| | $C_6H_5SiCl_3$ | 17,0% | 18,3% | 1,4% | 0,2% | 35,1% |
| | $C_6H_5Cl$ | 65,9% | 66,0% | 75,3% | 73,0% | 64,9% |
| Après coulée $C_6H_5SiCl_3$ | T.T. $C_6H_5SiCl_3$ | 48% | 53% | 90% | 99,6% | 0% |
| | Sélectivité $C_6H_5SiH_3$ | 100% | 100% | 100% | 100% | – |
| Après chauffage | T.T. $C_6H_5SiCl_3$ | 62% | 60% | 97% | 99,7% | 0% |
| | Sélectivité $C_6H_5SiH_3$ | 65% | 82% | 100% | 100% | – |

Nous voyons, d'après ces essais, qu'un rapport minimum $LiH/C_6H_5SiCl_3$ de 8/1 environ, molaire, est nécessaire pour que le taux de transformation de $C_6H_5SiCl_3$ soit de 100%.

Pour des rapports inférieurs, il reste dans le milieu du $C_6H_5SiCl_3$ non transformé, qui peut réagir avec $C_6H_5SiH_3$ lors du chauffage ultérieur, pour donner $C_6H_5SiHCl_2$ et $C_6H_5SiH_2Cl$, par des réactions de redistribution, catalysées par la TDA 1 et LiCl formé lors de la réduction:

$$2\ C_6H_5SiCl_3 + C_6H_5SiH_3 \longrightarrow 3\ C_6H_5SiHCl_2$$

$$C_6H_5SiCl_3 + 2\ C_6H_5SiH_3 \longrightarrow 3\ C_6H_5SiH_2Cl$$

L'essai témoin, n° 5, effectué sans TDA 1 prouve bien l'efficacité de ce catalyseur.

EXEMPLE 3

Synthèse de $C_6H_5SiH_3$ par réduction de $C_6H_5SiCl_3$ avec $CaH_2$

Appareillage identique à celui décrit dans l'exemple précédent.

Charges : 2,265g de TDA 1, soit $0,70.10^{-2}$ moles

29,55 g de $C_6H_5Cl$, soit 26,26 $10^{-2}$ moles

2,465g de $CaH_2$, soit 5,56 $10^{-2}$ moles

Coulée de 4,74g de $C_6H_5SiCl_3$ ($2,24.10^{-2}$ moles) en 15 mn. Nous n'observons aucune élévation de température.

Le milieu réactionnel est ensuite porté à 95°C pendant 4h.

L'analyse chromatographique phase gazeuse en fin de chauffage nous donne la composition suivante : (pourcentages massiques)

$C_6H_5SiH_3$ : 3,32%

$C_6H_5SiCl_3$ : 7,76%

$C_6H_5Cl$ : 88,92%

ce qui correspond à un taux de transformation de $C_6H_5SiCl_3$ de 46% et une sélectivité en $C_6H_5SiH_3$ de 100%.

EXEMPLE 4

Synthèse de $C_6H_5SiH_3$ par réduction de $C_6H_5SiCl_3$ avec NaH.

Dans le même appareillage que celui utilisé dans les deux exemples précédents, nous introduisons :

3,037g de TDA1, soit $0,94.10^{-2}$ moles,

16,481g de $C_6H_5Cl$, soit $14,64.10^{-2}$ moles,

4,812g de NaH, soit $20,05.10^{-2}$ moles.

Coulée de 8,041g de $C_6H_5SiCl_3$ ($3,80.10^{-2}$ moles) en 30 mn. La température du milieu réactionnel s'élève jusqu'à 50°C.

Après la fin de la coulée de $C_6H_5SiCl_3$, nous chauffons le réacteur pendant 1/2 heure, jusqu'à 120°C.

La composition du milieu réactionnel en fin de chauffage est la suivante (pourcentages massiques) :

$C_6H_5SiH_3$ 7,70%

$C_6H_5SiCl_3$ 20,14%

$C_6H_5Cl$ 72,16%

ce qui correspond à un taux de transformation de $C_6H_5SiCl_3$ de 43% et une sélectivité en $C_6H_5SiH_3$ de 100%.

EXEMPLE 5

Synthèse de $(CH_3)_2SiH_2$ par réduction de $(CH_3)_2SiCl_2$ avec LiH.

Nous avons utilisé dans cet exemple le même appareillage que celui utilisé lors des essais décrits dans les exemples précédents.

Afin d'éviter l'élimination de $(CH_3)_2SiH_2$ très volatil (Point d'ébullition de -20°C), du milieu réactionnel, nous avons refroidi le réfrigérant ascendant surmontant le réacteur, à l'aide d'un fluide cryogénique à -40°C, au lieu d'utiliser de l'eau.

Charges :TDA 1 : 1,905g, soit $0,59.10^{-2}$ moles

$C_6H_5Cl$ : 8,184g, soit $7,27.10^{-2}$ moles

LiH : 0,923g, soit $11,61.10^{-2}$ moles

Coulée de 3,27g de $(CH_3)_2SiCl_2$ ($2,53.10^{-2}$) en 20mn.

La température du milieu réactionnel s'élève jusqu'à 40°C.

La composition du milieu réactionnel, après la coulée de $(CH_3)_2SiCl_2$ et attente 1 h à température ambiante, est la suivante : (pourcentages massiques)

$(CH_3)_2SiH_2$ : 15,36%

$(CH_3)_2HSiCl$ : 0,51%

$C_6H_5Cl$ : 84,13%

ce qui correspond à un taux de transformation du $(CH_3)_2SiCl_2$ de 100% et une sélectivité en $(CH_3)_2SiH_2$ de 98%.

EXEMPLE 6

Synthèse de $SiH_4$ par réduction de $HSiCl_3$ avec LiH.

L'appareillage utilisé dans cet exemple est le suivant :

Réacteur Pyrex ® de 1 litre équipé d'un système de refroidissement à double enveloppe et serpentin dans lequel circule un fluide cryogénique à 0°C et d'un agitateur magnétique. Ce réacteur est surmonté d'un réfrigérant ascendant refroidi à -20°C.

La TDA 1 et l'hydrure de lithium sont chargés après inertage de l'appareillage à l'argon (essai effectué en l'absence de solvant).

$HSiCl_3$ est introduit à débit constant par l'intermédiaire d'une pompe volumétrique. La réaction de réduction qui a lieu même à 0°C est fortement exothermique.

La phase gazeuse est analysée en ligne par chromatographie phase gazeuse après mesure de son débit et dilution par un courant d'argon.

Charges : TDA 1 485 g soit 1,5 moles
LiH 47,7g soit 6 moles

$HSiCl_3$ est introduit à un débit de 79ml/h soit 0,78 moles/h.

La temperature du milieu réactionnel s'élève rapidement jusqu'à 45°C, malgré le refroidissement énergique.

La composition de la phase gazeuse sortant du réacteur est la suivante :

$H_2$ : 4,2%
$SiH_4$ : 87,0%
$H_3SiCl$ : 2,8%
$H_2SiCl_2$ : 0,5%
$HSiCl_3$ : 5,0%
$SiCl_4$ : 0,5%
et le débit du silane produit correspond bien an débit d'introduction de $HSiCl_3$.

La réaction s'arrête lorsque le taux de transformation de LiH atteint 60% environ.

EXEMPLE 7

Synthèse de $SiH_4$ par réduction de $HSiCl_3$ avec LiH.

Nous avons, dans cet exemple, effectué la réaction de réduction de $HSiCl_3$ en présence de solvant ($C_6H_5Cl$) et avec un taux de TDA 1 plus faible.

Le réacteur à agitateur magnétique de l'exemple précédent a été remplacé par un réacteur muni d'un système d'agitation à pales, plus efficace, ce réacteur est aussi à double enveloppe refroidie par circulation de fluide cryogénique, le reste de l'appareillage est identique à celui décrit dans l'exemple précédent.

Charges : $C_6H_5Cl$ : 1 238g soit 11 moles
TDA 1 : 48,5g soit 0,15 moles
LiH : 143,1g soit 18 moles

Débits d'introduction de $HSiCl_3$ : 95ml/h (0,94 moles/h) puis 192,4ml/h (1,89 moles/h).

Le faible taux de TDA 1 dans le milieu nécessite de limiter le refroidissement à 15°C environ en début de réaction afin d'amorcer celle-ci, qui ne démarre pas à 0°C. Une fois la réaction amorcée le fluide cryogénique est de nouveau refroidi à 0°C afin de limiter la température dans le réacteur.

Les compositions de la phase gazeuse sortant du réacteur sont les suivantes : (analyse chromatographie phase gazeuse)

- Pour un débit en $HSiCl_3$ de 0,94 moles/h
$H_2$ 0,4%
$SiH_4$ 99,6%
Le débit en $SiH_4$ produit est exactement de 0,94 moles/h.
- Pour un débit en $HSiCl_3$ de 1,89 moles/h
$H_2$ 0,3%
$SiH_4$ 99,0%
$HSiCl_3$ 0,7%

Le débit en $SiH_4$ produit est de 1,86 moles/h.

La réaction s'arrête lorsque le taux de transformation de LiH atteint 84%.

## Revendications

1. Le procédé selon la présente invention concerne en effet un procédé de fabrication d'hydrogénosilanes par réduction d'halogéno-silanes par un hydrure alcalin ou alcalino-terreux généralement dans un solvant en présence d'un catalyseur caractérisé en ce que le catalyseur est un agent séquestrant de formule

$[N{-}CHR_1{-}CHR_{23}{-}O{-}(CHR_3{-}O)_n{-}R_5]_3$ [I]

dans laquelle n est un nombre entier supérieur ou égal à 0 est inférieur ou égal à 10 ($0 \leq n \leq 10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_mH_{2m}-O$ ou $C_mH_{2m+1}-O-$, où m est compris entre 1 et 12 ($1 \leq m \leq 12$).

2. Procédé selon la revendication 1 caractérisé en ce que l'agent séquestrant est choisi parmi:
– La tris(oxa-3 butyl)amine de formule:
$N(-CH_2-CH_2-O-CH_3)_3$
– la tris(dioxa-3,6 heptyl)amine de formule:
$N(-CH_2-CH_2-O-CH_2-O-CH_3)_3$

– la tris(trioxa-3,6,9 décyl)amine de formule:
$N(-CH_2-CH_2-O-CH_2-CH_2-O-CH_2-CH_2-O-CH_3)_3$
– la tris(dioxa-3,6 octyl)amine de formule:
$N(-CH_2-CH_2-O-CH_2-CH_2-O-C_2H_5)_3$
– la tris(trioxa-3,6,9 undécyl)amine de formule:
$N(-CH_2-CH_2-O-CH_2-CH_2-O-CH_2-CH_2-O-C_2H_5)_3$
– la tris(dioxa-3,6 nonyl)amine de formule:
$N(-CH_2-CH_2-O-CH_2-CH_2-O-C_3H_7)_3$
– la tris(trioxa-3,6,9 dodécyl)amine de formule:
$N(-CH_2-CH_2-O-CH_2-CH_2-O-CH_2-CH_2-OC_3H_7)3$
– la tris(dioxa-3,6 décyl)amine de formule:
$N(-CH_2-CH_2-O-CH_2-CH_2-O-C_4H_9)_3$
– la tris(trioxa-3,6,9 tridécyl)amine de formule:
$N(-CH_2-CH_2-O-CH_2-CH_2-O-CH_2-CH_2-O-C_4H_9)_3$
– la tris(tetra-oxa-3,6,9,12 tridecyl)amine de formule:
$N-[CH_2-CH_2-O(-CH_2-CH_2-O)_3-CH_3]_3$
– la tris(hexa-oxa-3,6,9,12,15,18 nonadecyl)amine de formule:
$N-[CH_2-CH_2-O-(CH_2-O-)_5\ CH_3]_3$
– la tris(dioxa-3,6 méthyl-4 heptyl)amine de formule:
$N-[CH_2-CH_2-OCH-(CH_3)-CH_2-O-CH_3]_3$
– la tris(dioxa-3,6 diméthyl-2,4 heptyl)amine de formule:
$N-[CH_2-CH-(CH_3)-OCH(CH_3)-CH_2-O-CH_3]_3$.

3. Procédé selon la revendication 1 caractérisé en ce que l'agent séquestrant est greffé sur un support polymère organique réticulé par une pluralité de groupes fonctionnels, fixés sur ledit support, de formule générale

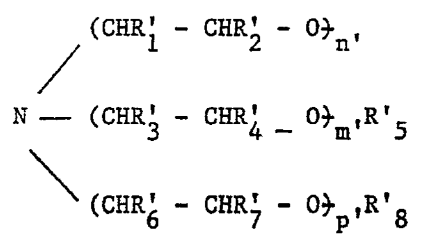

(II)

dans laquelle $R'_1$, $R'_2$, $R'_4$, $R'_6$ et $R'_7$ identiques ou différents sont chacun un atome d'hydrogène ou un radical alkyle ayant de 1 à 4 atomes de carbone, $R'_5$ et $R'_8$ identiques ou différents représentent un atome d'hydrogène, un radical alkyle ou cycloalkyle ayant de 1 à 12 atomes de carbone, un radical phényle, un radical $-C_{q'}H_{2q'}-O-$ ou $C_{q'}H_{2q'+1}-O-$avec q' supérieur ou égal à 1 et inférieur ou égal à environ 12, et dans laquelle n', m', et p' identiques ou différents sont supérieurs ou égaux à 1 et inférieurs ou égaux à 10.

4. Procédé selon la revendication 3, caractérisé en ce que n', m' et p' sont supérieurs ou égaux à 1 et inférieurs ou égaux à 6.

5. Procédé selon la revendication 3 caractérisé en ce que les groupes fonctionnels de la formule générale (II) sont tels que $R'_1$, $R'_2$, $R'_3$, $R'_4$, $R'_6$ et $R'_7$ identiques ou différents, représentent un atome d'hydrogène ou le radical méthyle et $R'_5$ et $R'_8$ identiques ou différents représentent un atome d'hydrogène ou un radical alkyle ayant de 1 à 4 atomes de carbone.

6. Procédé selon la revendication 4 ou 5 caractérisé en ce que les groupes fonctionnels sont choisis parmi:

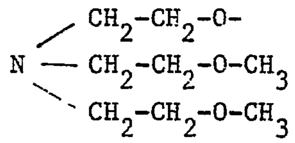

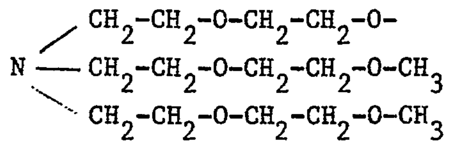

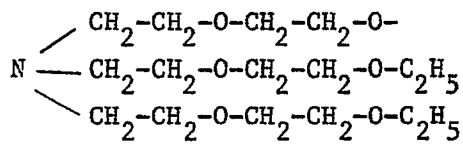

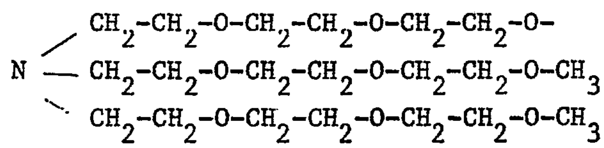

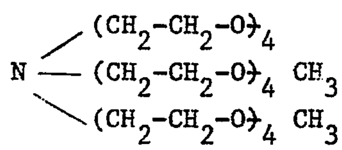

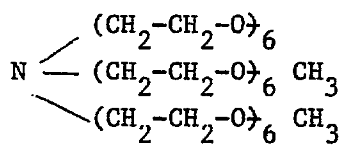

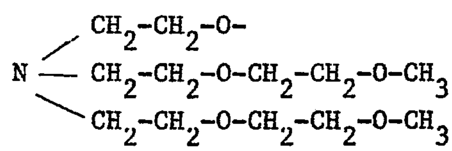

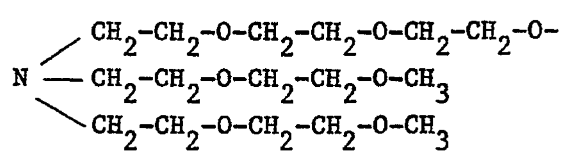

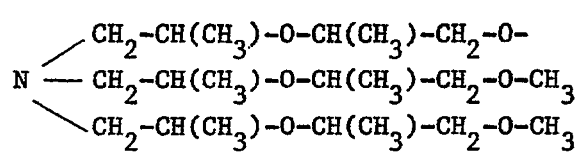

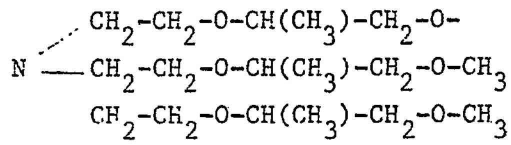

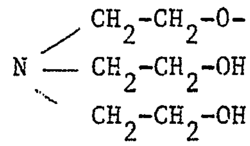

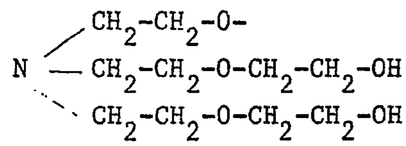

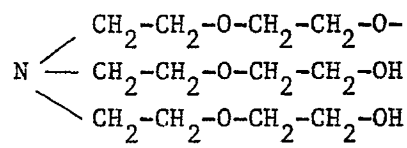

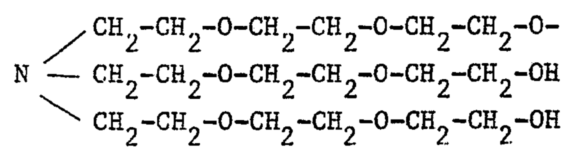

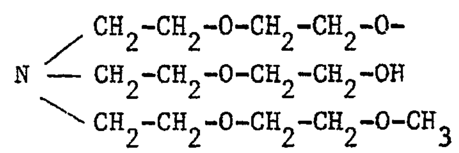

7. Procédé selon la revendication 1 caractérisé en ce que le rapport molaire entre le composé séquestrant et l'hydrure alcalin ou alcalino-terreux est compris entre 5 et 0,0001 et de préférence entre 0,5 et 0,001.

8. Procédé selon la revendication 1 caractérisé en ce que la proportion molaire entre l'hydrure et l'halogéno-silane est voisin de la stoechiométrie et de préférence avec un excès de 10 à 300% molaire d'hydrure.

## Claims

1. The process according to the present invention relates, in fact, to a process for the manufacture of hydrosilanes by reduction of halosilanes with an alkali metal or alkaline-earth metal hydride, generally in a solvent in the presence of a catalyst, characterized in that the catalyst is a sequestering agent of formula

$[N{-}CHR_1{-}CHR_{23}{-}O{-}(CHR_3{-}CHR_4{-}O)_n{-}R_5]_3$ (I)

in which n is an integer greater than or equal to and smaller than or equal to 10 ($0 \leq n \leq 10$), $R_1$, $R_2$, $R_3$ and $R_4$, which are identical or different, denote a hydrogen atom or an alkyl radical containing from 1 to 4 carbon atoms and $R_5$ denotes an alkyl or cycloalkyl radical containing from 1 to 12 carbon atoms, a phenyl radical or a radical $-C_mH_{2m}-O$ or $C_mH_{2m+1}-O-$, where m is between 1 and 12 ($1 \leq m \leq 12$).

2. Process according to Claim 1, characterized in that the sequestering agent is chosen from:

– tris(3-oxabutyl)amine of formula:

$N(-CH_2-CH_2-O-CH_3)_3$

– tris(3,6-dioxaheptyl)amine of formula:

$N(-CH_2-CH_2-O-CH_2-CH_2-O-CH_3)_3$
– tris(3,6,9-trioxadecyl)amine of formula:
$N(-CH_2-CH_2-O-CH_2-CH_2-O-CH_2-CH_2-O-CH_3)_3$
– tris(3,6-dioxaoctyl)amine of formula:
$N(-CH_2-CH_2-O-CH_2-CH_2-O-C_2H_5)_3$
– tris(3,6,9-trioxaundecyl)amine of formula:
$N(-CH_2-CH_2-O-CH_2-CH_2-O-CH_2-CH_2-O-C_2H_5)_3$
–tris(3,4-dioxanonyl)amine of formula:
$N(-CH_2-CH_2-O-CH_2-CH_2-O-C_3H_7)_3$
– tris(3,6,9-trioxadodecyl)amine of formula:
$N(-CH_2-CH_2-O-CH_2-CH_2-O-CH_2-CH_2-O-C_3H_7)_3$
– tris(3,6-dioxadecyl)amine of formula:
$N(-CH_2-CH_2-O-CH_2-CH_2-O-C_4H_9)_3$
– tris(3,6,9-trioxatridecyl)amine of formula:
$N(-CH_2-CH_2-O-CH_2-CH_2-O-CH_2-CH_2-O-C_4H_9)_3$
– tris(3,6,9,12-tetraoxatridecyl)amine of formula:
$N-[CH_2-CH_2-O-(CH_2-CH_2-O)_3-CH_3]_3$
– tris(3,6,9,12,15,18-hexaoxanonadecyl)amine of formula:
$N-[CH_2-CH_2-O-(CH_2-CH_2-O)_5CH_3]_3$
– tris(3,6-dioxa-4-methylheptyl)amine of formula:
$N-[CH_2-CH_2-OCH-(CH_3)-CH_2-O-CH_3]_3$
– tris(3,6-dioxa-2,4-dimethylheptyl)amine of formula:
$N-[CH_2CH-(CH_3)-OCH(CH_3)-CH_2-O-CH_3]_3$.

3. Process according to claim 1, characterized in that the grafted sequestering agent is constituted by a crosslinked organic polymer support and by a plurality of functional groups fixed onto the said support and having the following general formula:

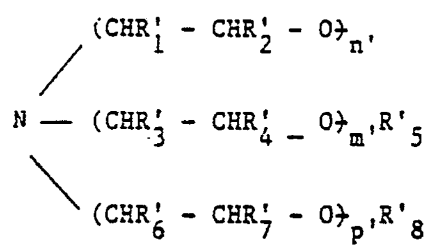

(II)

in which each of $R'_1$, $R'_2$, $R'_3$, $R'_4$, $R'_6$ and $R'_7$, which are identical or different, is a hydrogen atom or alkyl radical containing from 1 to 4 carbon atoms, $R'_5$ and $R'_8$ which are identical or different, denote a hydrogen atom, an alkyl or cycloalkyl radical containing from 1 to 12 carbon atoms, a phenyl radical, $-C_{q'}H_{2q'}-O-$ or $C_{q'}H_{2q'+1}-O-$ with q' greater than or equal to 1 and smaller than or equal to approximately 12, and in which n', m' and p', which are identical or different, are greater than or equal to 1 and smaller than or equal to 10.

4. Process according to Claim 3, characterized in that n', m' and p' are greater than or equal to 1 and smaller than or equal to 6.

5. Process according to Claim 3, characterized in that the functional groups in the general formula (II) are such that $R'_1$, $R'_2$, $R'_3$, $R'_4$, $R'_6$ and $R'_7$, which are identical or different, denote a hydrogen atom or the methyl radical and $R'_5$ et $R'_8$, which are identical or different, denote a hydrogen atom or alkyl radical containing from 1 to 4 atoms.

6. Process according to Claim 4 or 5, characterized in that the functional groups are chosen from:

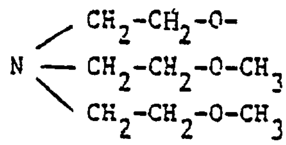

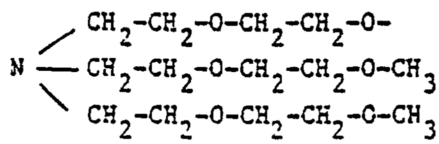

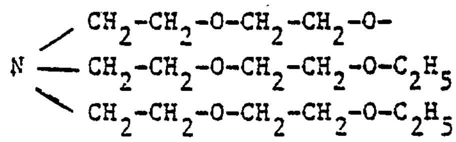

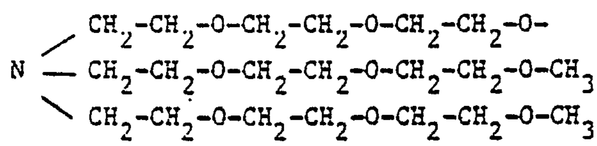

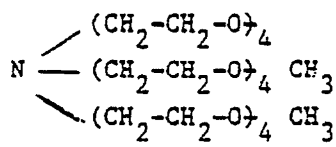

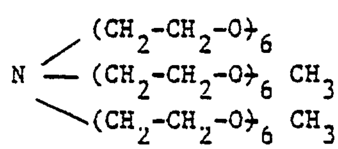

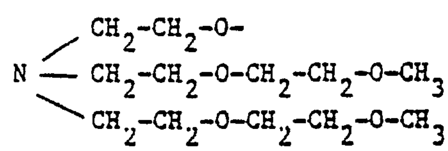

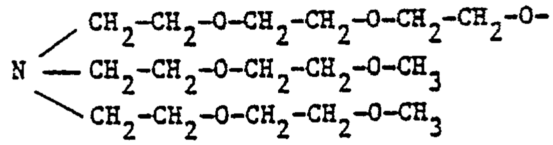

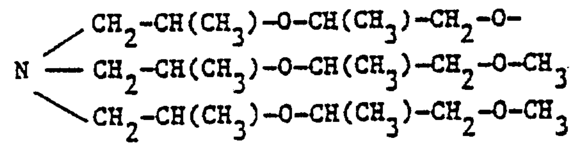

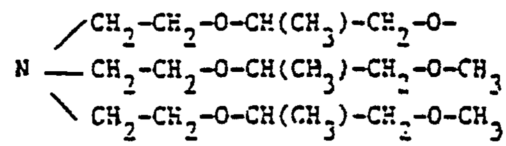

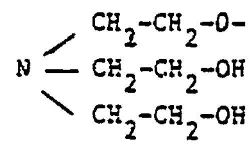

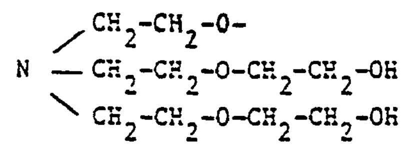

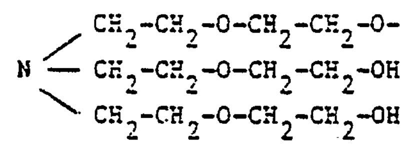

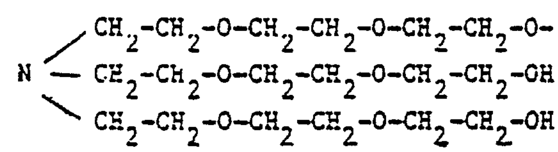

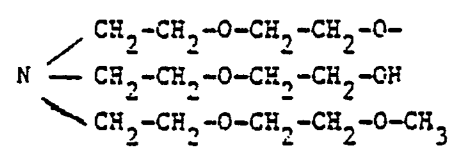

7. Process according to Claim 1, characterized in that the molar relationship between the sequestering compound and the alkali metal or alkaline-earth metal hydride is between 5 and 0.0001 and preferably between 0.5 and 0.001.

8. Process according to Claim 1, characterized in that the molar proportion between the hydride and the halosilane is close to stoichiometry and preferably with an excess of 10 to 300 mol% of hydride.

## Patentansprüche

1. Das Verfahren gemäß der vorliegenden Erfindung betrifft ein Verfahren zur Herstellung von Hydrogen-Silanen durch Reduktion von Halogen-Silanen mit einem Alkali- oder Erdalkalihydrid im allgemeinen in einem Lösungsmittel in Gegenwart eines Katalysators, dadurch gekennzeichnet, daß der Katalysator ein Maskierungsmittel der Formel

$[N{-}CHR_1{-}CHR_{23}{-}O{-}(CHR_3{-}CHR_4{-}O)_n{-}R_5]_3$ (I)

ist, in der n eine ganze Zahl größer oder gleich 0 oder kleiner oder gleich 10 ($0 \leq n \leq 10$) ist, $R_1$, $R_2$, $R_3$ und $R_4$ jeweils identisch oder verschieden sind und ein Wasserstoffatom oder einen Alkylrest mit 1 bis 4 Kohlenstoffatomen darstellen und $R_5$ einen Alkylrest oder Cycloalkylrest mit 1 bis 12 Kohlenstoffatomen, einen Phenylrest oder einen Rest $-C_mH_{2m}-O$ oder $C_mH_{2m+1}-O-$, darstellt, wobei m zwischen 1 und 12 liegt ($1 \leq m \leq 12$).

2. Verfahren nach Anspruch 1, dadurch gekennzeichnet, daß das Maskierungsmittel ausgewählt wird aus:
- dem Tris(3-oxa-butyl)amin der Formel:
$N(-CH_2-CH_2-O-CH_3)_3$
- dem Tris(3,6-dioxa-heptyl)amin der Formel:
$N(-CH_2-CH_2-O-CH_2-CH_2-O-CH_3)_3$
- dem Tris(3,6,9-trioxa-decyl)amin der Formel:
$N(-CH_2-CH_2-O-CH_2-CH_2-O-CH_2-CH_2-O-CH_3)_3$
- dem Tris(3,6-dioxa-octyl)amin der Formel:
$N(-CH_2-CH_2-O-CH_2-CH_2-O-C_2H_5)_3$
- dem Tris(3,6,9-trioxa-undecyl)amin der Formel:
$N(-CH_2-CH_2-O-CH_2-CH_2-O-CH_2-CH_2-O-C_2H_5)_3$
- dem Tris(3,6-dioxa-nonyl)amin der Formel:
$N(-CH_2-CH_2-O-CH_2-CH_2-O-C_3H_7)_3$
- dem Tris(3,6,9-trioxa-dodecyl)amin der Formel:
$N(-CH_2-CH_2-O-CH_2-CH_2-O-CH_2-CH_2-O-C_3H_7)_3$
- dem Tris(3,6-dioxa-decyl)amin der Formel:
$N(-CH_2-CH_2-O-CH_2-CH_2-O-C_4H_9)_3$
- dem Tris(3,6,9-trioxa-tridecyl)amin der Formel:
$N(-CH_2-CH_2-O-CH_2-CH_2-O-CH_2-CH_2-O-C_4H_9)_3$
- dem Tris(3,6,9,12-tetra-oxa-tridecyl)amin der Formel:
$N-[CH_2-CH_2-O-(CH_2-CH_2-)_3-CH_3]_3$
- dem Tris(3,6,9,12,15,18-hexa-oxa-nonadecyl)amin der Formel:
$N-[CH_2-CH_2-O-(CH_2-CH_2-O-)_5CH_3]_3$
- dem Tris(3,6-dioxa-4-methyl-heptyl)amin der Formel:
$N[CH_2-CH_2-OCH-(CH_3)-CH_2-O-CH_3]_3$
- dem Tris(3,6-dioxa-2,4-dimethyl-heptyl)amin der Formel:
$N-[CH_2CH-(CH_3)-OCH(CH_3)-CH_2-O-CH_3]_3$.

3. Verfahren nach Anspruch 1, dadurch gekennzeichnet, daß das gepfrapfte Maskierungsmittel aus einem vernetzten polymeren organischen Träger und einer Anzahl funktioneller Gruppen besteht, die an diesen Träger gebunden sind und folgender allgemeinen Formel:

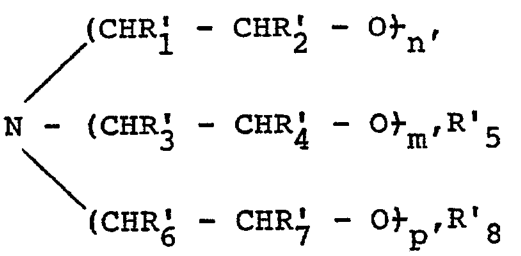

(II)

entsprechen, in der $R'_1$, $R'_2$, $R'_3$, $R'_4$, $R'_6$ und $R'_7$ identisch oder verschieden sind und jeweils ein Wasserstoffatom oder einen Alkylrest mit 1 bis 4 Kohlenstoffatomen darstellen, $R'_5$ und $R'_8$ identisch oder verschieden sind und jeweils ein Wasserstoffatom, einen Alkylrest oder Cycloalkylrest mit 1 bis 12 Kohlenstoffatomen, einen Phenylrest, einen Rest $-C_{q'}H_{2q'}-O-$ oder $C_{q'}H_{2q'+1}-O-$ darstellen mit q' größer oder gleich 1 und kleiner oder gleich 12, und in der n', m' und p' identisch oder verschieden sind und größer oder gleich 1 und kleiner oder gleich 10 sind.

4. Verfahren nach Anspruch 3, dadurch gekennzeichnet, daß n', m' und p' größer oder gleich 1 und kleiner oder gleich 6 sind.

5. Verfahren nach Anspruch 3, dadurch gekennzeichnet, daß die funktionellen Gruppen der allgemeinen Formel (II) derart sind, daß $R'_1$, $R'_2$, $R'_3$, $R'_4$, $R'_6$ und $R'_7$, die identisch oder verschieden sind, ein Wasserstoffatom oder einen Methylrest darstellen und $R'_5$ and $R'_8$ die identisch oder verschieden sind, ein Wasserstoffatom oder einen Alkylrest mit 1 bis 4 Kohlenstoffatomen darstellen.

6. Verfahren nach Anspruch 4 oder 5, dadurch gekennzeichnet, daß die funktionellen Gruppen ausgewählt werden aus:

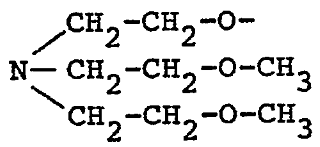

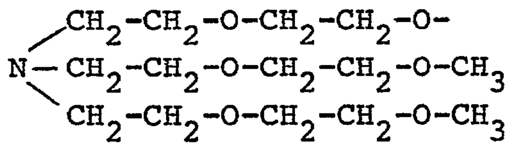

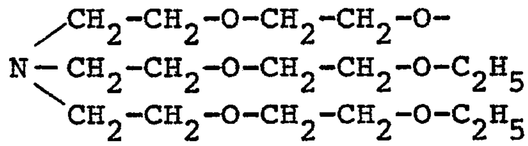

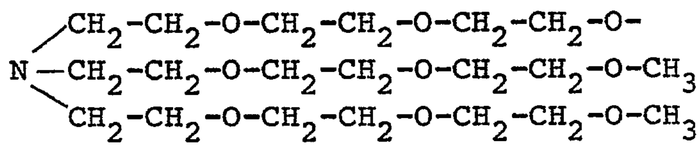

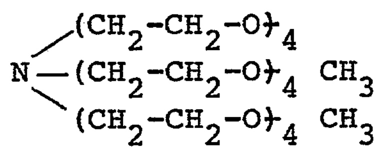

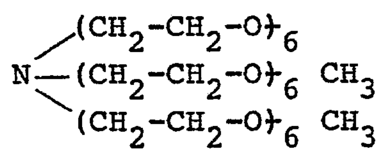

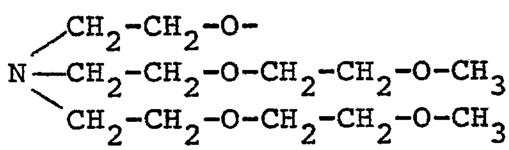

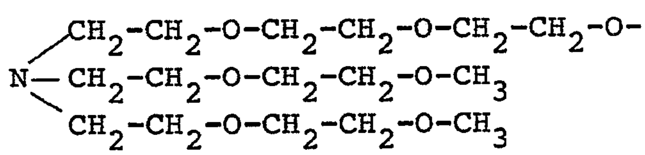

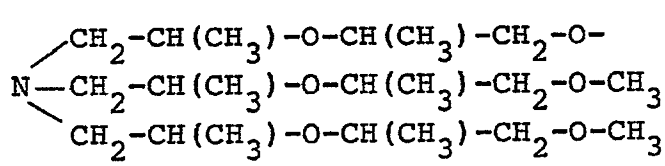

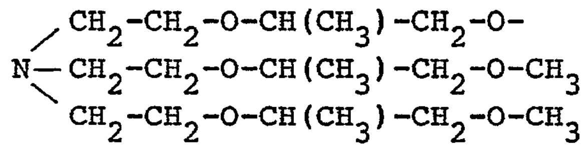

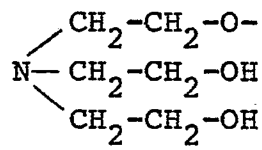

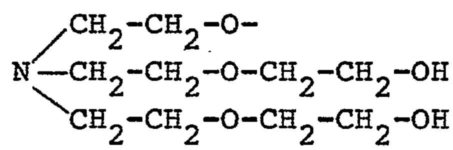

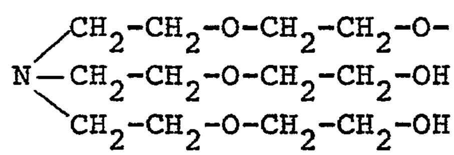

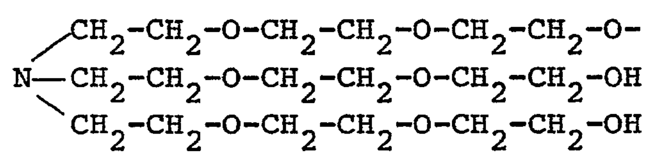

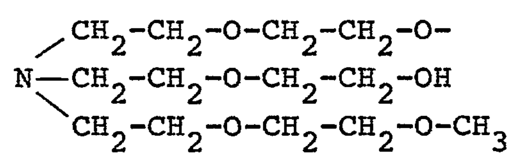

7. Verfahren nach Anspruch 1, dadurch gekennzeichnet, daß das molare Verhältnis zwischen der Maskierungsverbindung und dem Alkali- oder Erdalkalihydrid zwischen 5 und 0,0001 und vorzugsweise zwischen 0,5 und 0,001 liegt.

8. Verfahren nach Anspruch 1, dadurch gekennzeichnet, daß das molare Verhältnis zwischen dem Hydrid und dem Halogensilan in Nähe des stöchiometrischen Verhältnisses liegt, vorzugsweise mit einem molaren Überschuss von 10 bis 300% an Hydrid.